# EUROPÄISCHE PATENTSCHRIFT

(11) **EP 3 895 091 B1**
(45) Veröffentlichungstag und Bekanntmachung des Hinweises auf die Patenterteilung: **19.10.2022**
(21) Anmeldenummer: 19809111.8
(22) Anmeldetag: 02.12.2019
(51) Int. Cl.: G06Q 10/06, G06Q 10/00

(54) **VERFAHREN ZUM AUSTAUSCHEN EINES BAUTEILS IN EINER PERSONENTRANSPORTANLAGE SOWIE HIERBEI EINZUSETZENDE VORRICHTUNG**
METHOD FOR EXCHANGING A COMPONENT IN A PASSENGER TRANSPORT SYSTEM AND DEVICE USED TO IMPLEMENT THE METHOD
PROCÉDÉ DE REMPLACEMENT D'UN COMPOSANT DANS UNE INSTALLATION DE TRANSPORT DE PERSONNES AINSI QUE DISPOSITIF À UTILISER SELON LEDIT PROCÉDÉ

(30) Priorität: 12.12.2018 EP 18211944
(43) Veröffentlichungstag der Anmeldung: 20.10.2021
(73) Patentinhaber: INVENTIO AG, 6052 Hergiswil (CH)
(72) Erfinder: BURRI, Jürg, 5042 Hirschthal (CH); NOVACEK, Thomas, 2320 Schwechat (AT)
(74) Vertreter: Inventio AG
(86) Internationale Anmeldenummer: PCT/EP2019/083276
(87) Internationale Veröffentlichungsnummer: WO 2020/120192

(56) Entgegenhaltungen:
- US-A1- 2016 247 129
- US-A1- 2017 286 572
- US-A1- 2017 323 274

## Beschreibung

Die vorliegende Erfindung betrifft ein Verfahren zum Austauschen eines Bauteils in einer Personentransportanlage. Außerdem betrifft die Erfindung ein Verfahren zum Überwachen von aktuellen physikalischen Eigenschaften einer Personentransportanlage. Ferner betrifft die Erfindung eine Vorrichtung sowie ein Computerprogrammprodukt, welche insbesondere im Rahmen einer Durchführung des erfindungsgemäßen Verfahrens eingesetzt werden können, sowie ein das Computerprogrammprodukt speicherndes computerlesbares Medium.

Personentransportanlagen wie zum Beispiel Aufzüge, Fahrtreppen oder Fahrsteige dienen dazu, Personen innerhalb eines Bauwerks zu befördern. Eine Personentransportanlage besteht dabei aus einer Vielzahl von Bauteilen. Jedes der Bauteile hat hierbei charakteristische physikalische Eigenschaften. Dabei interagieren die Bauteile miteinander und/oder benachbarte Bauteile können aneinander befestigt sein. Die physikalischen Eigenschaften aller Bauteile sowie die Art und Weise, wie diese Bauteile zusammenwirken, bestimmen im Allgemeinen die physikalischen Eigenschaften der gesamten Personentransportanlage.

Beispielsweise aufgrund von Verschleiß an den Bauteilen können sich die physikalischen Eigenschaften der Personentransportanlage mit der Zeit verändern. Dies kann eine Arbeitsweise der Personentransportanlage beeinflussen bis hin zu einem Auftreten von Defekten oder Fehlfunktionen.

Bisher musste ein durch die physikalischen Eigenschaften definierter aktueller Zustand einer Personentransportanlage in gewissen Zeitabständen überwacht werden, um übermäßigen Verschleiß oder Ähnliches rechtzeitig erkennen zu können und die Personentransportanlage entsprechend warten zu können. Hierzu war es meist üblich, dass ein Techniker die Personentransportanlage vor Ort inspiziert. Alternativ oder ergänzend konnten an der Personentransportanlage technische Vorkehrungen wie beispielsweise Sensoren vorgesehen werden, mit deren Hilfe ein aktueller Zustand der Personentransportanlage beispielsweise von einem entfernten Überwachungszentrum aus überwacht werden konnte.

Neuere Computertechnologie sowie darauf ausführbare Computersimulationen bzw. Computermodellierungen können eine andere Art der Überwachung der physikalischen Eigenschaften einer Personentransportanlage ermöglichen. Dabei werden physikalische Eigenschaften der Personentransportanlage zum Beispiel in einem Anfangsstadium, d.h. beispielsweise direkt nach der vollständigen Installation der Personentransportanlage in einem Bauwerk, möglichst detailliert aufgenommen und in einem Computer gespeichert. Die dabei gespeicherten Daten werden teilweise auch als Digitaler-Doppelgänger-Datensatz (oder kürzer ausgedrückt als digitaler Doppelgänger oder digitaler Zwilling) bezeichnet. Eine Summe dieser Daten entspricht dabei nicht nur einer Art Bestandsaufnahme vor Inbetriebnahme der Personentransportanlage, sondern kann auch als Basis für Computersimulationen oder Computermodellierungen dienen, um mit der Zeit eintretende Veränderungen bei den physikalischen Eigenschaften der Personentransportanlage ermitteln zu können. Diese Daten habe eine so hohe Qualität, dass die gesamte physische Personentransportanlage auch als dreidimensionale virtuelle, und zudem dynamisch animierbare Repräsentation auf einem Computerbildschirm dargestellt werden kann. Auf diese Weise kann der Zustand der Personentransportanlage rein basierend auf einer Datenverarbeitung des Digitaler-Doppelgänger-Datensatzes überwacht werden oder eine Vor-Ort-Überwachung zumindest unterstützt werden. Hierdurch kann der Aufwand, der zur Überwachung und Wartung von Personentransportanlagen getrieben werden muss, erheblich reduziert werden. Solche Digitalen Zwillinge werden beispielsweise in der US2017/0286572 A1 und in der US2016/0247129 A1 beschrieben.

Allerdings wurde beobachtet, dass eine Überwachung des Zustands der Personentransportanlage basierend auf einem Digitaler-Doppelgänger-Datensatz, in dem Daten betreffend in einem Anfangsstadium vorherrschender physikalischer Eigenschaften der Personentransportanlage abgelegt sind, nicht immer zu zufriedenstellenden Ergebnissen führt.

Es kann unter anderem ein Bedarf bestehen, ein Verfahren und eine Vorrichtung zum Austauschen eines Bauteils in einer Personentransportanlage bereitzustellen, bei dem der korrespondierende Digitaler-Doppelgänger-Datensatz bezüglich seiner Daten, einfacher, sicherer und zugleich Speicherressourcen- und Prozessorressourcen- schonender der Personentransportanlage nachgeführt werden kann. Auch für ein hierfür einsetzbares Computerprogrammprodukt sowie ein dieses speicherndes computerlesbares Medium kann ein Bedarf bestehen.

Einem solchen Bedarf kann durch den Gegenstand gemäß einem der unabhängigen Ansprüche entsprochen werden. Vorteilhafte Ausführungsformen sind in den abhängigen Ansprüchen definiert sowie in der nachfolgenden Beschreibung angegeben.

Gemäß einem ersten Aspekt der Erfindung wird ein Verfahren zum Austauschen eines Bauteils in einer Personentransportanlage vorgeschlagen. Parallel zur Personentransportanlage existiert hierbei ein in einem Computer digital verarbeitbarer Digitaler-Doppelgänger-Datensatz, welcher Daten betreffend physikalische Eigenschaften der Personentransportanlage umfasst. Der Digitaler-Doppelgänger-Datensatz kann im Computer oder auf einem computerlesbaren Medium digital gespeichert sein. Das Verfahren umfasst zumindest die folgenden Verfahrensschritte, möglicherweise, aber nicht zwingend, in der angegebenen Reihenfolge:
- physisches Austauschen des Bauteils durch Entfernen eines existierenden Bauteils aus der Personentransportanlage und Ersetzen des existierenden Bauteils durch ein ersetzendes Bauteil; und
- zumindest teilautomatisiertes Austauschen von Bauteil-Daten betreffend physikalische Eigenschaften des Bauteils durch Ersetzen von Bauteil-Daten betreffend physikalische Eigenschaften des existierenden Bauteils durch Bauteil-Daten betreffend physikalische Eigenschaften des ersetzenden Bauteils in dem Digitaler-Doppelgänger-Datensatz. Hierbei ist der Digitaler-Doppelgänger-Datensatz aus einer Vielzahl von Bauteil-Datensatz-Modulen zusammengesetzt, wobei jedes dieser Bauteil-Datensatz-Module Bauteil-Daten betreffend physikalische Eigenschaften jeweils eines der Bauteile in der Personentransportanlage angeben, wobei beim Austauschen von Bauteil-Daten jeweils ein gesamtes Bauteil-Datensatz-Modul in dem Digitaler-Doppelgänger-Datensatz ersetzt wird.

Mit anderen Worten wird bei einem Austausch eines physischen Bauteils auch das diesem zugehörende Bauteil-Datensatz-Modul ersetzt. Hierzu werden die am physischen Ersatzteil direkt nach dessen Herstellung ausgemessenen physikalischen Eigenschaften in einem entsprechenden Bauteilmodell-Datensatz zusammengefasst. Hernach kann dieser ohne aufwändige Änderungsarbeiten in den Digitalen-Doppelgänger-Datensatz aufgenommen werden und ersetzt dadurch alle physikalischen Eigenschaften des entfernten physischen Bauteils vollständig. Somit lassen sich beim Nachpflegen des Digitalen-Doppelgänger-Datensatzes Übertragungsfehler wirkungsvoll vermeiden. Ein besonderer Vorteil dieses mittels Bauteil-Datensatz-Modulen strukturierten Digitaler-Doppelgänger-Datensatzes besteht auch darin, dass eine eindeutige Identifikation eines durch die Simulationsergebnisse erkannten Bauteils ermöglicht wird. Mit anderen Worten können durch die vorgenannte Strukturierung die Simulationen auf das einzelne Bauteil beziehungsweise dessen Bauteil-Datensatz-Modul heruntergebrochen werden, ohne dass die Einwirkung benachbart angeordneter Bauteile unbeachtet bleibt. Somit lässt sich das versagende Bauteil direkt identifizieren beziehungsweise ausgeben und es ist nicht wie in der US2017/0286572 A1 beschrieben, lediglich auf die Ausgabe eine Liste der beteiligten Bauteile beschränkt.

Gemäß einem zweiten Aspekt der Erfindung wird ein Verfahren zum Überwachen von aktuellen physikalischen Eigenschaften einer Personentransportanlage vorgeschlagen. Dabei sind anfängliche physikalische Eigenschaften der Personentransportanlage in einem Computer in einem digital gespeicherten und verarbeitbaren Digitaler-Doppelgänger-Datensatz angegeben. Die aktuellen physikalischen Eigenschaften der Personentransportanlage werden hierbei durch Berechnungen, Simulationen und/oder Modellierungen basierend auf den im Digitaler-Doppelgänger-Datensatz angegebenen anfänglichen physikalischen Eigenschaften ermittelt. Einzelne Bauteile der Personentransportanlage werden dabei mittels eines Verfahrens gemäß einer Ausführungsform des ersten Aspekts der Erfindung ausgetauscht.

Gemäß einem dritten Aspekt der Erfindung wird eine Vorrichtung zum Aktualisieren eines Digitaler-Doppelgänger-Datensatzes im Rahmen der Durchführung eines Verfahrens gemäß einer Ausführungsform des ersten oder zweiten Aspekts der Erfindung, vorgeschlagen. Der Digitaler-Doppelgänger-Datensatz umfasst hierbei Daten betreffend physikalische Eigenschaften einer Personentransportanlage. Die Vorrichtung ist dazu konfiguriert, im Zusammenhang mit einem physischen Austauschen eines Bauteils durch Entfernen eines existierenden Bauteils aus der Personentransportanlage und Ersetzen des existierenden Bauteils durch ein ersetzendes Bauteil Daten betreffend physikalische Eigenschaften des Bauteils im Dialog mit dem Verfahrensdurchführenden an der Personentransportanlage zumindest teilautomatisiert auszutauschen durch Ersetzen von Bauteil-Daten betreffend physikalische Eigenschaften des existierenden Bauteils durch Bauteil-Daten betreffend physikalische Eigenschaften des ersetzenden Bauteils in dem Digitaler-Doppelgänger-Datensatz. Um die Datenqualität während des Ersetzens sicherzustellen, ist der Digitaler-Doppelgänger-Datensatz aus einer Vielzahl von Bauteil-Datensatz-Modulen zusammengesetzt, wobei jedes dieser Bauteil-Datensatz-Module Bauteil-Daten betreffend physikalische Eigenschaften jeweils eines der Bauteile in der Personentransportanlage angeben, wobei beim Austauschen von Bauteil-Daten jeweils ein gesamtes Bauteil-Datensatz-Modul in dem Digitaler-Doppelgänger-Datensatz ersetzt wird.

Der Verfahrensdurchführende kann hierbei eine Person des Wartungspersonals, aber beispielsweise auch ein Wartungsroboter oder dergleichen mehr sein. Gattungsgemäß verfügen diese Verfahrensdurchführende über entsprechende elektronische Geräte und Schnittstellen wie Mobiltelefone, Tablets, Laptops, drahtgebundene oder drahtlose Übertragungsmittel und dergleichen mehr, durch welche Daten vom Digitaler-Doppelgänger-Datensatz abgerufen oder an diesen übermittelt werden können.

Gemäß einem vierten Aspekt der Erfindung wird ein Computerprogrammprodukt mit computerlesbaren Anweisungen, bei deren Ausführung ein Computer dazu instruiert wird, das Austauschen der Bauteil-Daten in dem Digitaler-Doppelgänger-Datensatz bewirkende Verfahrensschritte bei einem Verfahren gemäß einer Ausführungsform des ersten oder zweiten Aspekts der Erfindung durchzuführen.

Gemäß einem fünften Aspekt der Erfindung wird ein computerlesbares Medium mit einem darauf gespeicherten Computerprogrammprodukt gemäß einer Ausführungsform des vierten Aspekts der Erfindung vorgeschlagen.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Im Allgemeinen sind Personentransportanlagen wie Aufzüge, Fahrtreppen und Fahrsteige Einzelanfertigungen. Das heißt, jede Personentransportanlage wird im Regelfall speziell für die von ihr zu erfüllenden Aufgaben konzipiert. Dabei werden insbesondere vorherrschende Gegebenheiten in einem die Personentransportanlage aufnehmenden Bauwerk berücksichtigt. Bei der Konzeptionierung und Kommissionierung einer Personentransportanlage bestehen daher viele Freiheitsgrade, da für jede einzelne Personentransportanlage individuell verschiedene Bauteile und/oder unterschiedliche Anzahlen von Bauteilen eingesetzt werden können. Beispielsweise richten sich die einzusetzenden Bauteile einer Fahrtreppe oder eines Fahrsteiges unter anderem nach der durch die Fahrtreppe/Fahrsteig zu überbrückenden Länge, nach einer zu erzielenden Förderkapazität, nach Belastbarkeiten und Tragfähigkeiten innerhalb eines Bauwerks, etc. In ähnlicher Weise richten sich die einzusetzenden Bauteile eines Aufzugs unter anderem nach der Anzahl der von dem Aufzug zu bedienenden Stockwerke, zu erzielenden Förderkapazitäten, Belastbarkeiten und Tragfähigkeiten innerhalb des Bauwerks, etc. Auch lokal, d.h. national oder regional, unterschiedliche Regularien und Gesetze können Einfluss auf die Auswahl der einzusetzenden Bauteile nehmen. Ferner können individuelle Kundenwünsche die konkrete Ausgestaltung einer Personentransportanlage beeinflussen.

Aufgrund der Vielzahl möglicher Ausgestaltungen von Personentransportanlagen und der darin eingesetzten Bauteile kann sich eine Überwachung des Zustands einer Personentransportanlage besonders aufwendig gestalten. Bisher mussten im Regelfall gut geschultes Wartungspersonal und/oder eine Vielzahl unterschiedlicher Sensoren innerhalb der Personentransportanlage eingesetzt werden, um den aktuellen Zustand der Personentransportanlage zuverlässig überwachen zu können.

Hinzu kommt, dass Personentransportanlagen nach ihrer Installation immobil sind. Dies bringt mit sich, dass Wartungspersonal zu einer zu wartenden Personentransportanlage fahren muss, um deren Zustand vor Ort inspizieren zu können, bzw. dass von Sensoren gelieferte Signale beispielsweise an eine Überwachungszentrale übermittelt werden müssen, um dort analysiert werden zu können. Dies kann einen hohen Aufwand für die Überwachung der Personentransportanlage mit sich bringen.

Andererseits werden mit Personentransportanlagen Menschen befördert, sodass deren Betrieb stets sicher sein muss. Eine durchgängige Überwachung des Zustands einer Personentransportanlage dahingehend, dass die in ihr vorherrschenden physikalischen Eigenschaften einen sicheren Betrieb gewährleisten, muss daher sichergestellt sein.

Wie einleitend bereits angedeutet, kann der Zustand einer Personentransportanlage unter Verwendung der Daten eines digitalen Doppelgängers in vorteilhafter und aufwandsarmer Weise überwacht werden. Die Anmelderin der vorliegenden Patentanmeldung hat diesbezüglich bereits vorhergehende Patentanmeldungen mit der Anmeldenummer EP 17207385 und dem Titel "Verfahren und Vorrichtung zum Überwachen eines Zustands einer Personentransportanlage durch Verwenden eines digitalen Doppelgängers" sowie der Anmeldenummer EP 17207399 und dem Titel "Verfahren und Vorrichtung zum Kommissionieren einer zu fertigenden Personentransportanlage durch Erstellen eines digitalen Doppelgängers" eingereicht. In diesen vorhergehenden Patentanmeldungen sind Einzelheiten, wie ein Digitaler-Doppelgänger-Datensatz aufgenommen werden kann und welche Daten darin enthalten sein können sowie wie darauf basierend der Zustand einer Personentransportanlage überwacht bzw. die Personentransportanlage kommissioniert werden kann, ausführlich angegeben. In den vorhergehenden Patentanmeldungen beschriebene Eigenschaften und Details können teilweise auch auf die in der vorliegenden Patentanmeldung beschriebenen Verfahren und Vorrichtungen angewendet bzw. angepasst übertragen werden. Der Inhalt der vorhergehenden Patentanmeldungen wird hiermit vollumfänglich in die vorliegende Patentanmeldung aufgenommen.

Basierend auf einem zuvor aufgenommenen Digitaler-Doppelgänger-Datensatz können durch geeignete Datenverarbeitung in einem Computer Informationen über sich mit der Zeit einstellende Veränderungen bei den physikalischen Eigenschaften der Personentransportanlage ermittelt werden. Ein hierfür eingesetzter Computer kann beispielsweise in einem Überwachungszentrum, das heißt entfernt von der zu überwachenden Personentransportanlage, lokalisiert sein. Die Datenverarbeitung kann dabei auf Computersimulationen und/oder Computermodellierungen zurückgreifen.

Hierdurch lassen sich Aussagen über einen sich mit der Zeit ändernden Zustand der Personentransportanlage ableiten, mithilfe derer beispielsweise aktuelle oder zukünftige anstehende Wartungsarbeiten unterstützt bzw. vereinfacht werden können.

Die in dem Digitaler-Doppelgänger-Datensatz enthaltenen Daten können die tatsächlichen physikalischen Eigenschaften der in der fertig montierten und installierten Personentransportanlage verbauten Bauteile wiedergeben. Die Daten können dabei unterschiedliche physikalische Eigenschaften wie beispielsweise mechanische Eigenschaften, elektrische Eigenschaften, magnetische Eigenschaften, thermische Eigenschaften, etc. angeben. Die Daten können hierbei zum Beispiel Abmessungen eines Bauteils in verschiedenen Raumrichtungen angeben und somit eine Geometrie des betreffenden Bauteils wiedergeben. Ferner können die Daten beispielsweise Informationen über eingesetzte Materialien, elektrische und/oder thermische Leitfähigkeiten und vieles mehr wiedergeben. Der digitale Doppelgänger kann somit als virtuelles Abbild der fertigen Personentransportanlage bzw. der darin enthaltenen Bauteile angesehen werden. Die in dem Digitaler-Doppelgänger-Datensatz enthaltenen Daten sollen dabei die physikalischen Eigenschaften der Bauteile ausreichend detailliert widerspiegeln, um daraus Aussagen über aktuelle strukturelle und/oder funktionelle Eigenschaften der gesamten Personentransportanlage ableiten zu können. Insbesondere sollen anhand des digitalen Doppelgängers Aussagen über aktuelle strukturelle und/oder funktionelle Eigenschaften, welche einen aktuellen Zustand der gesamten Personentransportanlage charakterisieren, abgeleitet werden können, die für eine Beurteilung von deren aktueller oder zukünftiger Betriebssicherheit, deren aktueller oder zukünftiger Verfügbarkeit und/oder einer aktuellen oder zukünftigen Notwendigkeit für eine Wartung oder Reparatur herangezogen werden können.

Allerdings wurde nun erkannt, dass es im Laufe des Betriebs einer Personentransportanlage zu Veränderungen an derselben kommen kann, die bisher bei den zur Überwachung des Zustands der Personentransportanlage eingesetzten Computersimulationen bzw. Computermodellierungen nicht berücksichtigt wurden.

Insbesondere wurde erkannt, dass es im Laufe des Betriebs einer Personentransportanlage notwendig werden kann, einzelne Bauteile der Personentransportanlage auszutauschen.

Beispielsweise können Bauteile aufgrund von Verschleiß oder auftretenden Defekten auszutauschen sein.

Bisher wurde ein solcher Austausch von Bauteilen in einer Personentransportanlage nicht in dem dazugehörigen digitalen Doppelgänger berücksichtigt. Stattdessen führte ein physisches Austauschen eines Bauteils in der Personentransportanlage im Regelfall zu keiner Veränderung in dem zugehörigen Digitaler-Doppelgänger-Datensatz bzw. wurde angenommen, dass das ersetzende Bauteil mit dem zuvor existierenden Bauteil identisch ist und sich somit die physikalischen Eigenschaften der Personentransportanlage durch den Austausch nicht ändern.

Es wurde jedoch nun erkannt, dass ein solches vereinfachtes Vorgehen bzw. derartige vereinfachende Annahmen dazu führen können, dass im Laufe des Betriebs der Personentransportanlage und insbesondere nach dem Austauschen eines oder mehrerer Bauteile in der Personentransportanlage die realen physikalischen Eigenschaften der Personentransportanlage nicht mehr ausreichend genau durch die in dem Digitaler-Doppelgänger-Datensatz abgelegten Daten wiedergegeben sein können.

Es wird daher für das hierin beschriebene Verfahren zum Austauschen eines Bauteils in einer Personentransportanlage vorgeschlagen, zusätzlich zu dem physischen Austauschen des Bauteils auch diejenigen Daten, die physikalische Eigenschaften des ausgetauschten Bauteils betreffen und die daher nachfolgend als Bauteil-Daten bezeichnet werden, in dem Digitaler-Doppelgänger-Datensatz auszutauschen. Bauteil-Daten, die physikalische Eigenschaften des existierenden Bauteils, d.h. desjenigen Bauteils, welches zuvor in der Personentransportanlage verbaut war, beschreiben, werden dabei durch Bauteil-Daten ersetzt, die physikalische Eigenschaften des ersetzenden Bauteils beschreiben.

Die physikalischen Eigenschaften des existierenden Bauteils und des ersetzenden Bauteils können sich dabei insbesondere aufgrund unterschiedlicher Verschleißgrade bei den Bauteilen unterscheiden. Dies kann bei den Bauteil-Daten dahingehend berücksichtigt sein, dass die darin angegebenen physikalischen Eigenschaften den jeweiligen Verschleißgrad berücksichtigen. Alternativ kann für ein Bauteil in den Bauteil-Daten angegeben sein, wann das jeweilige Bauteil eingesetzt bzw. in Betrieb genommen wurde, sodass diese Information bei Berechnungen, Simulationen und/oder Modellierungen berücksichtigt werden kann. So kann ein zeitbedingtes Alterungsverhalten wie beispielsweise ein zunehmendes Verspröden von Polymerwerkstoffen über die Zeit in die Simulationen einfließen und laufend in den entsprechenden Bauteil-Daten geändert werden, so dass das Dämpfungsverhalten des existierenden Bauteils sich vom ersetzenden Bauteil deutlich unterscheidet.

Die physikalischen Eigenschaften des existierenden Bauteils und des ersetzenden Bauteils können sich jedoch auch hinsichtlich anderer Parameter unterscheiden, beispielsweise weil geometrische Eigenschaften, eingesetzte Materialien oder Ähnliches bei dem ersetzenden Bauteil zwischenzeitlich modifiziert wurden.

Das Austauschen der Bauteil-Daten soll dabei zumindest teilautomatisiert, vorzugsweise vollständig automatisiert, durchgeführt werden. Anders ausgedrückt sollen die Bauteil-Daten betreffend das zuvor existierende Bauteil in dem Digitaler-Doppelgänger-Datensatz durch die Bauteil-Daten des ersetzenden Bauteils durch automatisierte Tätigkeiten einer oder mehrerer hierbei eingesetzter Vorrichtungen durchgeführt oder zumindest unterstützt werden, sodass ein menschliches Zutun in diesem Zusammenhang nicht benötigt wird oder zumindest minimiert werden kann. Mögliche Ausgestaltungen, wie eine solche Automatisierung implementiert werden kann, werden weiter unten angegeben.

Wie bereits erwähnt wurde, ist der Digitaler-Doppelgänger-Datensatz aus einer Vielzahl von Bauteil-Datensatz-Modulen zusammengesetzt. Jedes Bauteil-Datensatz-Modul kann hierbei Bauteil-Daten betreffend physikalische Eigenschaften jeweils eines der Bauteile in der Personentransportanlage angeben.

Anders ausgedrückt, ist der Digitaler-Doppelgänger-Datensatz modular aufgebaut. Der Digitaler-Doppelgänger-Datensatz besteht dabei aus einer Vielzahl selbstständiger Bauteil-Datensatz-Module. Vorzugsweise ist für jedes in der betreffenden Personentransportanlage verbaute Bauteil ein eigenes Bauteil-Datensatz-Modul vorgesehen, welches die physikalischen Eigenschaften dieses konkreten Bauteils in der Personentransportanlage angibt. Konkret bedeutet in diesem Zusammenhang, dass zumindest einige der physikalischen Eigenschaften beispielsweise durch Ausmessen geometrischer Daten direkt am physischen Bauteil ermittelt und in das zugeordnete Bauteil-Datensatz-Modul übernommen wurden. Dadurch ist kein Bauteil-Datensatz-Modul vollkommen gleich wie das Andere, auch wenn ihre zugeordneten physikalischen Bauteile nach ein und derselben Fertigungsspezifikation auf derselben Bearbeitungsmaschine gefertigt wurde. Jedes einzelne Bauteil-Datensatz-Modul bildet dabei einen in sich abgeschlossenen Datensatz, der die physikalischen Eigenschaften des Bauteils unabhängig von Eigenschaften benachbarter Bauteile in der Personentransportanlage wiedergibt.

Durch einen solchen modularen Ansatz können in dem Digitaler-Doppelgänger-Datensatz einzelne Bauteil-Datensatz-Module ausgetauscht werden, ohne dass hierbei andere Bauteil-Datensatz-Module des gesamten Digitaler-Doppelgänger-Datensatzes modifiziert werden bräuchten. Hierdurch kann das zumindest teilautomatisierte Austauschen von Bauteil-Daten betreffend physikalische Eigenschaften des ersetzenden Bauteils erheblich vereinfacht oder eventuell sogar erst ermöglicht werden.

Gemäß einer konkretisierten Ausführungsform kann hierbei jedes Bauteil-Datensatz-Modul Bauteileinheit-Daten betreffend physikalische Eigenschaften des Bauteils selbst sowie Schnittstellen-Daten betreffend physikalische Eigenschaften, welche eine Kooperation des Bauteils mit anderen Bauteilen beschreiben, umfassen. Mit anderen Worten kann ein Bauteil-Datensatz-Modul zumindest zwei verschiedene Arten von Daten umfassen.

Eine erste Art, welche hierin als Bauteileinheit-Daten bezeichnet wird, gibt die physikalischen Eigenschaften des Bauteils selbst, das heißt intrinsische Eigenschaften des Bauteils als eigenständige Einheit, an. Diese Bauteileinheit-Daten charakterisieren physikalische Eigenschaften des Bauteils unabhängig davon, wie dieses Bauteil mit anderen Bauteilen kooperiert oder wechselwirkt. Solche Bauteileinheit-Daten können beispielsweise Informationen über eine Geometrie, einen strukturellen Aufbau, verwendete Materialien, etc. angeben.

Eine zweite Art von Daten, welche hierin als Schnittstellen-Daten bezeichnet wird, gibt physikalische Eigenschaften des Bauteils an, welche im Rahmen einer Kooperation des betreffenden Bauteils mit anderen Bauteilen beeinflussend sind. Diese Schnittstellen-Daten können somit dafür genutzt werden, um zu analysieren, wie das Bauteil mit benachbarten Bauteilen wechselwirkt.

Beispielsweise können diese Schnittstellen-Daten Informationen zu Grenzflächen, entlang derer das Bauteil an einem benachbarten Bauteil anliegt, enthalten. Solche Informationen können beispielsweise geometrische Eigenschaften der Grenzflächen, für die Grenzflächen verwendete Materialien, deren mechanische, elektrische, thermische und andere Eigenschaften, etc. beinhalten. Insbesondere können die Schnittstellen-Daten Informationen über Positionskoordinaten mehrerer Schnittstellen bzw. Grenzflächen zueinander sowie gegebenenfalls auch Informationen zu angrenzenden Bauteilen beinhalten. Hierdurch können unter anderem Möglichkeiten geschaffen werden, zu verifizieren, ob das jeweilige Bauteil im Rahmen eines Austauschs in korrekter Weise ersetzt bzw. in die Personentransportanlage eingefügt wurde.

Der modulare Aufbau des Digitaler-Doppelgänger-Datensatzes wird beim Austauschen von Bauteil-Daten nun dahingehend genutzt, dass im Ersatzfalle eines physischen Bauteils jeweils auch ein gesamtes Bauteil-Datensatz-Modul in dem Digitaler-Doppelgänger-Datensatz ersetzt wird.

Anders ausgedrückt können für den Fall, dass ein Bauteil in der Personentransportanlage physisch ausgetauscht wurde, nicht nur einzelne, das ersetzende Bauteil betreffende Daten in dem Digitaler-Doppelgänger-Datensatz ersetzt werden, wobei diese Daten über den gesamten Digitaler-Doppelgänger-Datensatz verteilt angeordnet sein könnten und dementsprechend gesucht werden müssten und weiterhin geprüft werden müsste, ob tatsächlich alle das ersetzende Bauteil betreffenden Daten korrekt ersetzt wurden. Stattdessen kann das dem ausgetauschten Bauteil zugehörige Bauteil-Datensatz-Modul als Gesamtheit ersetzt werden.

Aufgrund der Gegebenheit, dass jedes Bauteil-Datensatz-Modul für sich eine abgeschlossene Einheit bildet und Wechselwirkungen mit benachbarten Bauteilen lediglich aufgrund entsprechender Einflüsse auf die durch die Schnittstellen-Daten angegebenen physikalischen Eigenschaften Ausdruck finden, können einzelne Bauteil-Datensatz-Module daher einfach und mit wenig Datenverarbeitungsaufwand ausgetauscht werden.

Gemäß einer Ausführungsform können die Bauteil-Daten betreffend physikalische Eigenschaften des ersetzenden Bauteils auch Montage-Daten umfassen, welche durch eine Art eines Einbaus des ersetzenden Bauteils in die Personentransportanlage beeinflusst sind.

Anders ausgedrückt können die Bauteil-Daten neben physikalischen Eigenschaften, welche das jeweilige Bauteil als unabhängiges Element beschreiben, d.h. unabhängig davon, wie das Bauteil in der Personentransportanlage verbaut ist, auch physikalische Eigenschaften angeben, die davon abhängen, wie das ersetzende Bauteil in der Personentransportanlage eingebaut bzw. integriert wird. Die Montage-Daten können hierbei eine Information darüber liefern, wie das Bauteil während der Montage bearbeitet bzw. allgemein in seinen physikalischen Eigenschaften modifiziert wurde. Aus diesen Informationen kann dann beispielsweise abgeleitet werden, wie sich andere physikalische Eigenschaften des ausgetauschten Bauteils und/oder benachbarter Bauteile durch die Montage bzw. durch die bei der Montage bewirkten Einflüsse geändert haben bzw. in Zukunft ändern können.

Beispielsweise können gemäß einer Ausführungsform die Montage-Daten Kräfte und/oder Momente umfassen, welche angewendet wurden, um beim Ersetzen des Bauteils das ersetzende Bauteil in der Personentransportanlage zu fixieren.

Mit anderen Worten können die Montage-Daten Kräfte und/oder Momente beschreiben, welche auf das ersetzende Bauteil beim Austauschen des Bauteils und/oder auf hierbei eingesetzte Fixierungsmittel ausgeübt wurden, um das ersetzende Bauteil beispielsweise an benachbarten Bauteilen anzubringen und somit innerhalb der Personentransportanlage zu fixieren. Die Montage-Daten können dabei den entsprechenden Bauteil-Datensatz-Modulen in dem Digitaler-Doppelgänger-Datensatz zugeordnet werden. Beispielsweise können die Montage-Daten Anpresskräfte oder hiermit korrelierende Anpressdrücke beschreiben, mit denen ein Bauteil beim Austauschen an andere Bauteile der Personentransportanlage angepresst wird. Alternativ oder ergänzend können die Montage-Daten beispielsweise Anzugsmomente umfassen, welche angeben, wie stark beispielsweise eine zum Fixieren des Bauteils eingesetzte Schraube beim Austauschen des Bauteils angezogen wurde.

Aus den angegebenen Montage-Daten können unter Anderem Montage-bedingte Einflüsse abgeleitet werden, welche sowohl die physikalischen Eigenschaften und Funktionen des ausgetauschten Bauteils selbst als auch dessen Kooperation mit anderen Bauteilen in der Personentransportanlage wiedergeben können. Hierdurch können beispielsweise elastische Gestaltänderungen, wie sie sich aufgrund der bei der Montage eingesetzten Kräfte und/oder Momente sowohl bei dem ausgetauschten Bauteil als auch bei benachbarten Bauteilen ergeben können, berechnet bzw. modelliert werden.

Gemäß einer konkreten Ausführungsform können die Montage-Daten hierbei von einem zur Montage eingesetzten Werkzeug automatisch erfasst und automatisiert an den, den Digitaler-Doppelgänger-Datensatz speichernden Computer übermittelt werden.

Anders ausgedrückt können im Rahmen des physischen Austauschens eines Bauteils in einer Personentransportanlage spezielle Werkzeuge eingesetzt werden, welche Montage-Daten, die die physikalischen Eigenschaften des ausgetauschten Bauteils beeinflussen, automatisiert erfassen und an den Computer, der den Digitaler-Doppelgänger-Datensatz speichert, weiterleiten. Beispielsweise kann ein zum Anziehen von Schrauben eingesetztes Werkzeug die beim Anziehen bewirkten Kräfte und/oder Momente automatisiert erfassen und an den genannten Computer weiterleiten. Hierzu kann eine Datenkommunikationsverbindung leitungsbasiert oder drahtlos zwischen dem Werkzeug und dem Computer etabliert sein. In dem Computer können die übermittelten Montage-Daten vorzugsweise automatisiert dem aktuell ausgetauschten Bauteil bzw. dem die physikalischen Eigenschaften dieses ausgetauschten Bauteils wiedergebenden Bauteil-Datensatz-Modul zugeordnet werden. Hierauf basierend können dann wiederum möglichst automatisiert beispielsweise Änderungen bei der Gestalt oder anderen physikalischen Eigenschaften des ausgetauschten Bauteils berechnet bzw. nachmodelliert werden.

Gemäß einer Ausführungsform können die ein ersetzendes Bauteil betreffenden Bauteil-Daten in einem an dem ersetzenden Bauteil vorgesehenen Datenspeicher gespeichert sein. Von dort aus können Sie dann automatisiert an den, den Digitaler-Doppelgänger-Datensatz speichernden Computer übermittelt werden.

Mit anderen Worten kann an einem Bauteil für eine Personentransportanlage individuell ein Datenspeicher vorgesehen sein. Der Datenspeicher kann fest an dem Bauteil angebracht sein oder zumindest derart mit dem Bauteil verbunden sein, dass er beim Austauschen des Bauteils problemlos verfügbar und auslesbar ist. In diesem Datenspeicher können das Bauteil betreffende Bauteil-Daten gespeichert sein, welche physikalische Eigenschaften dieses Bauteils charakterisieren. Die Bauteil-Daten können in dem Datenspeicher vorzugsweise in digitaler Form abgelegt sein. Der Datenspeicher kann beispielsweise ein elektronischer Datenspeicher, ein magnetischer Datenspeicher, ein optischer Datenspeicher oder Ähnliches sein. Dementsprechend kann der Datenspeicher elektronisch, magnetisch, optisch oder in anderer Weise ausgelesen werden. Zum Auslesen der Bauteil-Daten kann eine separate Auslesevorrichtung vorgesehen sein. Diese Auslesevorrichtung kann beispielsweise Teil eines zum Austauschen des Bauteils eingesetzten Werkzeugs sein. Alternativ kann die Auslesevorrichtung als separates Gerät vorgesehen sein. Beim physischen Austauschen des Bauteils können dann die Bauteil-Daten automatisiert aus dem Datenspeicher ausgelesen und an den Computer weitergeleitet werden. Alternativ kann ein Monteur das zuvor genannte separate Gerät dazu einsetzen, die Bauteil-Daten auszulesen und dann an den Computer weiterzuleiten.

Gemäß einer alternativen Ausführungsform kann an dem Bauteil eine eindeutige Identifikation vorgesehen sein. Die ein ersetzendes Bauteil betreffenden Bauteil-Daten können in diesem Fall in einem von dem Bauteil entfernt vorgesehenen Datenspeicher gespeichert sein. Die das ersetzende Bauteil betreffenden Bauteil-Daten können hierbei durch Übermitteln der Identifikation automatisiert von dem Datenspeicher an den, den Digitaler-Doppelgänger-Datensatz speichernden Computer übermittelt werden.

Anders ausgedrückt können die zu einem spezifischen Bauteil zugehörigen Bauteil-Daten für möglicherweise jedes einer Mehrzahl von Bauteilen beispielsweise zentral in einem Datenspeicher abgelegt sein. Dieser Datenspeicher kann sich entfernt von der Personentransportanlage befinden. Der Datenspeicher kann beispielsweise Teil einer Datenwolke ("Cloud") sein, in der zum Beispiel alle Bauteil-Daten zu einer Vielzahl von Bauteilen, die in unterschiedlichsten Personentransportanlagen eingesetzt werden können, gespeichert sein können.

Jedes Bauteil bzw. jeder Typ von Bauteil kann dabei eine eindeutige Identifikation (ID) aufweisen. Diese Identifikation kann beispielsweise direkt an dem Bauteil angeordnet oder mit diesem mitgeliefert sein. Beispielsweise kann die Identifikation als Zahlencode oder Strichcode an dem Bauteil vorgesehen sein. Die Identifikation kann vorzugsweise automatisiert, d.h. maschinell, ausgelesen werden. Im Rahmen eines Austauschens eines Bauteils kann dann die Identifikation des betreffenden Bauteils ausgelesen und an den die Bauteil-Daten speichernden Datenspeicher übermittelt werden. Basierend auf dieser Identifikation können in dem Datenspeicher dann die zugehörigen Bauteil-Daten ermittelt werden und diese letztendlich an den Computer, in dem der Digitaler-Doppelgänger-Datensatz gespeichert bzw. verarbeitet wird, übermittelt werden.

Gemäß einer Ausführungsform können während einer Durchführung von Verfahrensschritten zum physischen Austauschen des Bauteils durchzuführende Arbeitsschritte von einem Computerprogramm unter Berücksichtigung der das Bauteil betreffenden Bauteil-Daten vorgegeben werden.

Anders ausgedrückt können einem Monteur, der in einer Personentransportanlage ein Bauteil physisch austauschen soll, während dieses Vorgangs Hilfestellungen gegeben werden, indem ihm Informationen betreffend hierbei durchzuführender Arbeitsschritte übermittelt werden. Bei der Erstellung dieser Informationen können dabei die Bauteil-Daten des auszutauschenden Bauteils berücksichtigt werden. Diese Bauteil-Daten können aus dem Digitaler-Doppelgänger-Datensatz entnommen bzw. abgeleitet werden.

Beispielsweise kann hierzu ein Computerprogramm bereitgestellt werden, welches dazu konfiguriert ist, zu erkennen, dass ein Bauteil der Personentransportanlage ausgetauscht werden soll, und dann eine geeignete Informationsausgabe zu generieren, mit der dem den Austausch durchführenden Monteur geeignete Hilfestellungen gegeben werden. Das Erkennen, dass ein Bauteil ausgetauscht werden soll, kann dabei automatisiert erfolgen, beispielsweise aufgrund einer aktuellen Analyse des digitalen Doppelgängers und/oder aufgrund von Sensorsignalen von einen Zustand der Personentransportanlage bzw. des Bauteils überwachenden Sensoren. Alternativ kann dieses Erkennen auch aufgrund einer geeigneten Eingabe, welche von dem Monteur durchgeführt werden kann, erfolgen. Anschließend kann mittels des Computerprogramms auf die zu dem auszutauschenden Bauteil zugehörigen Bauteil-Daten zurückgegriffen werden. Hierauf basierend kann dann die Information, die dem Monteur bereitgestellt werden soll, abgeleitet werden. Beispielsweise können die Bauteil-Daten durch das Computerprogramm selbst analysiert werden, um zu erkennen, welche Arbeitsschritte zum Austauschen des Bauteils erforderlich sind. Alternativ können unter Berücksichtigung der Bauteil-Daten aus einer ergänzenden Datenbank Informationen zu den durchzuführenden Arbeitsschritten abgeleitet werden. Die Informationen zu den durchzuführenden Arbeitsschritten können dann beispielsweise visuell wahrnehmbar, beispielsweise durch Ausgabe auf einem Display, oder akustisch wahrnehmbar, beispielsweise durch Ausgabe mittels eines Lautsprechers, ausgegeben werden.

Das Ausgeben von Informationen betreffend durchzuführende Arbeitsschritte zum Austauschen eines Bauteils kann ein Risiko von fehlerhaften Montagevorgängen deutlich reduzieren. Zudem kann durch die Rückführung der Montage-Daten die Qualität der Montage eins zu eins simuliert und überwacht werden.

Gemäß einer Ausführungsform der Erfindung können während des hierin vorgeschlagenen Verfahrens Ist-Daten betreffend aktuell vorherrschende physikalische Eigenschaften der Personentransportanlage ermittelt werden und zugehörige Daten in dem Digitaler-Doppelgänger-Datensatz durch die Ist-Daten ersetzt werden.

Mit anderen Worten können beim Austauschen eines Bauteils in einer Personentransportanlage nicht nur die das auszutauschende Bauteil betreffenden Bauteil-Daten in dem Digitaler-Doppelgänger-Datensatz ersetzt werden, sondern ergänzend auch andere Daten in dem Digitaler-Doppelgänger-Datensatz aktualisiert werden. Hierbei kann beispielsweise ausgenutzt werden, dass ein Monteur ohnehin an der Personentransportanlage präsent ist, um das genannte Bauteil auszutauschen. Der Monteur kann daher vor Ort weitere Maßnahmen durchführen oder veranlassen, um feststellen zu können, wie sich physikalische Eigenschaften der Personentransportanlage bzw. ihrer Bauteile beispielsweise seit der Installation oder seit einer vorangehenden Inspektion verändert haben. Beispielsweise kann der Monteur physikalische Eigenschaften von Bauteilen aktuell messen oder vorhandene Sensoren dazu veranlassen, solche Messungen durchzuführen. Dabei erhaltene Ist-Daten repräsentieren somit tatsächliche, aktuell vorliegende physikalische Eigenschaften der Bauteile und können zugehörige Daten in dem Digitaler-Doppelgänger-Datensatz, welche früher vorherrschende physikalische Eigenschaften dieser Bauteile angeben, ersetzen. Auf diese Weise kann der Digitaler-Doppelgänger-Datensatz aktualisiert werden und somit seine Zuverlässigkeit dahingehend erhöht werden, dass daraus abgeleitete Aussagen über einen aktuellen Zustand der Personentransportanlage mit höherer Wahrscheinlichkeit korrekt sind.

Insgesamt kann mit Ausführungsformen des hierin beschriebenen Verfahrens gemäß des ersten Aspekts der Erfindung zum Austauschen eines Bauteils in einer Personentransportanlage eine bessere Überwachung von aktuellen physikalischen Eigenschaften der Personentransportanlage im Rahmen einer Ausführungsform des Verfahrens gemäß des zweiten Aspekts der Erfindung ermöglicht werden. Anders ausgedrückt können Verfahren zum Überwachen eines Zustands einer Personentransportanlage, welche einen digitalen Doppelgänger nutzen, um aus dessen in dem Digitaler-Doppelgänger-Datensatz abgelegten Daten betreffend anfängliche physikalische Eigenschaften der Personentransportanlage dann Aussagen über aktuell vorliegende physikalische Eigenschaften der Personentransportanlage abzuleiten, dadurch verbessert werden, dass für den Fall, dass ein Bauteil in der Personentransportanlage ausgetauscht wird, auch die zugehörigen Bauteil-Daten in dem zugehörigen Digitaler-Doppelgänger-Datensatz ausgetauscht werden. Da der Digitaler-Doppelgänger-Datensatz somit aktuell gehalten wird und die realen Bedingungen in der Personentransportanlage wiedergeben kann, können aus diesem verlässlichere Aussagen über Veränderungen bei physikalischen Eigenschaften der Personentransportanlage abgeleitet werden.

Ausführungsformen der Vorrichtung zum Aktualisieren eines Digitaler-Doppelgänger-Datensatzes gemäß dem dritten Aspekt der Erfindung können sich eines Computers bedienen. In dem Computer kann der Digitaler-Doppelgänger-Datensatz gespeichert und verarbeitet werden. Die Vorrichtung kann dabei dazu konfiguriert sein, zu erkennen, wenn ein Bauteil in einer Personentransportanlage ausgetauscht wird. Dies erfolgt im Dialog mit der Verfahrensdurchführung an der Personentransportanlage. Das bedeutet, dass verschieden Informationen, wie Zeitinformationen (wenn das neue Bauteil eingesetzt wird, kann dies auch der Startzeitpunkt zum Austausch der Bauteil-Daten sein), Quittierungsinformationen des durchführenden Monteurs oder Wartungsroboters, während der Montage erfasste Drehmomente, Rückmeldungen von der Vorrichtung an den durchführenden Monteur oder Wartungsroboter, Aufforderungen bestimmte Angaben einzugeben oder Messwerte zu erfassen, etc. , zwischen der Vorrichtung und den mit der Verfahrensdurchführung involvierten Geräten und Personen ausgetauscht werden. Die Vorrichtung kann dann zumindest teilautomatisiert oder vorzugsweise vollautomatisiert die Identität des ausgetauschten Bauteils erkennen und die Bauteil-Daten betreffend das ersetzende Bauteil beispielsweise aus einem Datenspeicher auslesen. Die Vorrichtung kann dann wiederum zumindest teilautomatisiert oder vorzugsweise vollautomatisiert diese Bauteil-Daten betreffend das ersetzende Bauteil in den Digitaler-Doppelgänger-Datensatz als Ersatz für entsprechende Bauteil-Daten betreffend das ursprünglich existierende Bauteil einfügen. Eine gewünschte Automatisierung kann dabei durch geeignete Hardware, beispielsweise in Form von Sensoren, Scannern, Kameras, etc. und/oder geeignete Software implementiert werden.

Insbesondere kann eine Software in Form eines Computerprogrammprodukts gemäß dem vierten Aspekt der Erfindung eingesetzt werden, welche computerlesbare Instruktionen enthält, bei deren Ausführung ein Computer dazu instruiert wird, das Austauschen der Bauteil-Daten in dem Digitaler-Doppelgänger-Datensatz bewirkende Verfahrensschritte bei einem Verfahren gemäß dem ersten oder zweiten Aspekt der Erfindung durchzuführen bzw. zu kontrollieren. Ein solches Computerprogrammprodukt kann in einer beliebigen Computersprache formuliert sein.

Das Computerprogrammprodukt kann auf einem beliebigen computerlesbaren Medium gespeichert sein. Ein solches Medium kann beispielsweise eine CD, eine DVD, ein Flashspeicher oder ein ähnliches, vorzugsweise portables Datenspeichermedium sein. Möglich ist auch eine Speicherung in einem Speichermedium einer Steuerung der Personentransportanlage. Alternativ kann ein solches Medium Teil eines Computers sein, auf dem Daten gespeichert und von dem Daten heruntergeladen werden können. Ein solcher Computer kann beispielsweise ein Server oder ein Teil einer Datenwolke (Cloud) sein, wobei Daten beispielsweise über ein Netzwerk, insbesondere über das Internet, heruntergeladen werden können.

Es wird darauf hingewiesen, dass einige der möglichen Merkmale und Vorteile der Erfindung hierin mit Bezug auf unterschiedliche Ausführungsformen beschrieben sind. Insbesondere sind Merkmale und Vorteile teilweise mit Bezug auf Ausführungsformen des Verfahrens zum Austauschen eines Bauteils und teilweise mit Bezug auf ein Verfahren zum Überwachen von aktuellen physikalischen Eigenschaften einer Personentransportanlage bzw. auf eine Vorrichtung, mithilfe derer entsprechende Verfahrensschritte durchzuführen sind, beschrieben. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt äußerst schematisch eine aus mehreren physischen Bauteilen bestehende Personentransportanlage.
Fig. 2 zeigt einen Digitaler-Doppelgänger-Datensatz, welcher die in der Figur 1 dargestellte Personentransportanlage virtueller, elektronischer Form abbildet.

Die Figuren sind lediglich schematisch und nicht maßstabsgetreu. Gleiche Bezugszeichen bezeichnen in den verschiedenen Figuren gleiche oder gleichwirkende Merkmale.

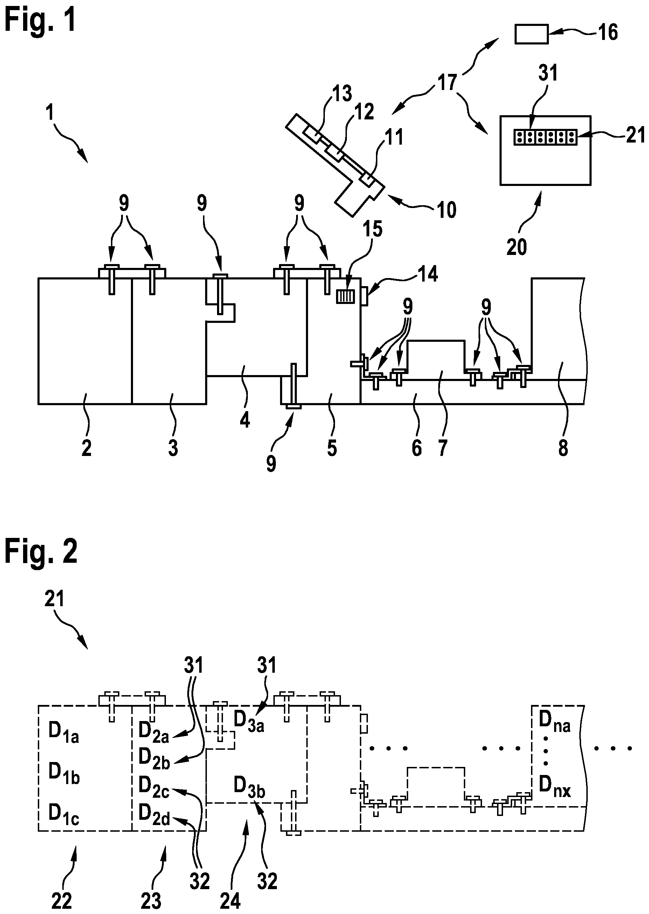

Fig. 1 zeigt in einer vereinfachten Darstellung eine Personentransportanlage 1 mit darin verbauten Bauteilen 2 bis 8. Dabei sind sowohl die Personentransportanlage 1 als auch die Bauteile 2 bis 8 lediglich äußerst schematisch dargestellt, da es zum Verständnis der vorliegenden Erfindung nicht auf die konkrete Darstellung der Personentransportanlage 1 und ihrer Bauteile ankommt. Konkretisiert kann die Personentransportanlage beispielsweise eine Fahrtreppe oder ein Fahrsteig sein und deren Bauteile können typische Komponenten einer solchen Fahrtreppe oder eines solchen Fahrsteiges sein, wie zum Beispiel Stufenelemente, Palettenelemente, Elemente einer Förderkette, Antriebselemente, Elemente eines tragenden Fachwerks, etc. Alternativ kann die Personentransportanlage beispielsweise ein Aufzug sein und deren Bauteile können zum Beispiel Teile einer Aufzugkabine, ein Gegengewicht, Führungsschienen, Fixierungselemente, ein Antrieb, mehrere seil- oder riemenartige Tragmittel, Aufzugtüren, etc. sein. Die einzelnen Bauteile 2 bis 8 können dabei über Befestigungsmittel 9 wie zum Beispiel Schrauben aneinander und/oder an tragenden Strukturen innerhalb der Personentransportanlage 1 befestigt sein.

Bei der Planung, Kommissionierung und/oder Fertigstellung der Personentransportanlage 1 können physikalische Eigenschaften ihrer Bauteile 2 bis 8 bestimmt werden. Dabei erhaltene Informationen können als Bauteil-Daten 31 in einem Digitaler-Doppelgänger-Datensatz 21 abgelegt sein. Der Digitale-Doppelgänger-Datensatz 21 kann beispielsweise in einem Speicher eines Computers 20 abgespeichert sein. Dieser Computer 20 kann sich entfernt von der Personentransportanlage 1 befinden.

In Fig. 2 ist eine schematische Darstellung eines Digitaler-Doppelgänger-Datensatzes 21 wiedergegeben. Der Digitaler-Doppelgänger-Datensatz 21 ist dabei aus einer Vielzahl einzelner Bauteil-Datensatz-Module 22, 23, 24 zusammengesetzt. Jedes dieser Bauteil-Datensatz-Module 22, 23, 24 beinhaltet Bauteil-Daten 31 betreffend physikalische Eigenschaften D1a, D1b, D1c, D2a, D2b, ..., Dna, ... Dnx eines zugeordneten Bauteils 2 bis 8. Da es sich bei diesen Bauteil-Datensatz-Modulen 22, 23, 24 um Datensätze handelt, mit deren Hilfe eine dreidimensionale, virtuelle Abbildung der Personentransportanlage 1 der Figur 1 beispielsweise auf dem Bildschirm des Computers 20 dargestellt werden kann, haben diese Bauteil-Datensatz-Module 22, 23, 24 zwar dieselbe Gestalt wie ihre physischen Entsprechungen, sie sind aber mit unterbrochener Linie dargestellt. Die Bauteil-Daten 31 können beispielsweise Informationen über eine Geometrie, verwendete Materialien und/oder sonstige physikalische Eigenschaften Dna, ... Dnx des zugehörigen Bauteils 2 bis 8 angeben. Ferner können in einem Bauteil-Datensatz-Modul 22, 23, 24 auch weitere physikalische Eigenschaften Dna, ... Dnx wie beispielsweise Montage-Daten 32 abgelegt sein. Diese Montage-Daten 32 beziehen sich auf eine Art und Weise eines Einbaus eines Bauteils 2 bis 8 in die Personentransportanlage 1. Beispielsweise können die Montage-Daten 32 Informationen über Drehmomente D2c, D2d, D3d, mit denen eine der als Befestigungselemente 9 dienenden Schrauben bei der Montage angezogen wurde, beinhalten.

Mithilfe des Digitaler-Doppelgänger-Datensatzes 21 kann ein Zustand der Personentransportanlage 1 überwacht werden. Hierzu können basierend auf den in dem Digitaler-Doppelgänger-Datensatz 21 enthaltenen Bauteil-Daten 31 und Montage-Daten 32 mithilfe von Computersimulationen und/oder Computermodellierungen Aussagen über mit der Zeit eintretende Veränderungen bei den physikalischen Eigenschaften Dna, ... Dnx der Personentransportanlage 1 und ihrer Bauteile 2 bis 8 ermittelt werden.

Wenn bei einer Wartung der Personentransportanlage 1 Bauteile 2 bis 8 ausgetauscht werden, verändern sich typischerweise einige ihrer charakterisierenden physikalischen Eigenschaften. Diese Änderungen sollten daher auch in dem Digitaler-Doppelgänger-Datensatz 21, der parallel zu der Personentransportanlage 1 existiert und als Simulationsumgebung beispielsweise für eine Überwachung der Personentransportanlage 1 und/oder eine vorausschauende Wartungsplanung bezüglich derselben genutzt werden kann, nachgeführt werden.

Ausführungsformen der vorliegenden Erfindung sehen vor, dass bei einem physischen Austauschen eines der Bauteile 2 bis 8 in der Personentransportanlage 1 auch das zu dem jeweiligen Bauteil gehörige Bauteil-Datensatz-Modul 22, 23, 24 ausgetauscht wird. In dem ersetzenden Bauteil-Datensatz-Modul 22, 23, 24 sind dabei Bauteil-Daten 31 betreffend das ersetzende Bauteil 2 bis 8 abgelegt. Dabei können sowohl Bauteileinheit-Daten, welche physikalische Eigenschaften Dna, ... Dnx des Bauteils selbst angeben, wie auch Schnittstellen-Daten Dna, ... Dnx, welche physikalische Eigenschaften angeben, die eine Kooperation des Bauteils mit anderen Bauteilen beschreiben, umfasst sein.

Vorzugsweise kann mit verschiedenen Versionen (Releases) des Digitaler-Doppelgänger-Datensatzes 21 gearbeitet werden, wobei der letzte Stand der "alten Version" eingefroren und eine "neue Version" aus der "alten Version" mit Ersetzen des jeweiligen Bauteil-Datensatz-Moduls 22, 23, 24 des ausgetauschten Bauteils 2 bis 8 erzeugt werden kann.

Hierbei können auch Daten beim Montieren anfallen, wie zum Beispiel Anzugsmomente von Schrauben oder anderen Befestigungsmitteln 9. Hierzu kann beispielsweise ein mit einem Sensor 11 ausgestattetes Werkzeug 10 verwendet werden. In dem Werkzeug 10 können von dem Sensor 11 ermittelte Messdaten bezüglich bei der Montage eingesetzter Kräfte oder Drehmomente in einer Auswerteeinrichtung 12 ausgewertet und dann mithilfe einer Übermittlungseinrichtung 13 beispielsweise drahtlos an den Computer 20, der den Digitaler-Doppelgänger-Datensatz 21 speichert und verarbeitet, übermittelt werden. Die auf diese Weise übermittelten Montage-Daten 32 können in dem Digitaler-Doppelgänger-Datensatz 21 beispielsweise einem virtuellen Modell des Befestigungsmittels 9 bzw. konkret der Schraube zugeordnet werden. Alternativ können die Montage-Daten 32 auch durch einen Monteur eingegeben werden oder von einer zuvor verwendeten Schraube übernommen werden, wodurch sich jedoch eine geringere Datengüte in dem Digitaler-Doppelgänger-Datensatz 21 ergibt. Vorzugsweise können solche charakterisierenden physikalische Eigenschaften Dna, ... Dnx entsprechend gekennzeichnet werden, das heißt es kann angegeben werden, ob sie übernommen, gemessen oder eingegeben wurden. Auf diese Weise kann eine spätere Fehleranalyse erleichtert werden.

Als Voraussetzung für die Durchführbarkeit des hierin vorgeschlagenen Verfahrens kann ein Digitaler-Doppelgänger-Datensatz 21 angesehen werden, der analog der physischen Personentransportanlage 1 aus separaten bzw. separierbaren Bauteil-Datensatz-Modulen 22, 23, 24 zusammengesetzt ist, die durch Schnittstellen-Daten virtuell miteinander verbunden sind. Die Schnittstellen-Daten können dabei Schnittstelleninformationen wie zum Beispiel Koordinaten in einem dreidimensionalen Raum angeben.

Um einzelne Bauteil-Datensatz-Module 22, 23, 24 mit den darin befindlichen Bauteil-Daten 31 und gegebenenfalls Montage-Daten 32 zu ersetzen, sind mehrere Möglichkeiten vorstellbar. Beispielsweise können Daten automatisiert durch eine Übernahme von neuen Bauteil-Datensatz-Modulen 22, 23, 24 mit charakterisierenden physikalischen Eigenschaften Dna, ... Dnx bei einer Bestellung des bereits hergestellten, an Lager liegenden Ersatz-Bauteiles in den Digitaler-Doppelgänger-Datensatz 21 eingefügt werden. Eine Freigabe der neuen Version des Digitaler-Doppelgänger-Datensatzes 21 sollte durch einen Monteur erfolgen, wobei gegebenenfalls Montagedaten erfasst und eingegeben werden sollten.

Je nach Ausführung kann ein physisches Ersatz-Bauteil beispielsweise einen lokalen Datenspeicher 14 in Form eines Chips mit darauf gespeicherten Daten aufweisen, die beispielsweise von dem Werkzeug 10 ausgelesen und automatisch in den Digitaler-Doppelgänger-Datensatz 21 übernommen werden.

Alternativ ist vorstellbar, dass an oder bei dem Ersatz-Bauteil eine Identifikation 15 in Form einer Seriennummer oder eines maschinenlesbaren Codes vorhanden ist und auf einem als entfernter Datenspeicher 16 wirkenden Computer oder in einer Datenwolke eine Datei abgespeichert ist, die Bauteil-Daten mit Informationen hinsichtlich der physikalischen Eigenschaften Dna, ... Dnx des Ersatz-Bauteils beinhaltet. Beim Einbau des Ersatz-Bauteils kann beispielsweise durch den Monteur die Seriennummer bzw. der Code erfasst werden und damit der zugehörige Datensatz aus dem als entfernter Datenspeicher 16 dienenden Computer bzw. der Datenwolke (Cloud) abgerufen werden und in den Digitaler-Doppelgänger-Datensatz 21 übernommen werden.

Das speziell ausgestaltete Werkzeug 10 kann zusammen mit dem den Digitaler-Doppelgänger-Datensatz 21 speichernden Computer 20 sowie gegebenenfalls dem entfernten Datenspeicher 16 eine Vorrichtung 17 bilden, mithilfe derer der Digitaler-Doppelgänger-Datensatz 21 im Rahmen eines Austauschens von Bauteilen 2 bis 8 in der Personentransportanlage 1 aktualisiert werden kann.

Alternativ zu diesem Vorgehen können die charakterisierenden physikalischen Eigenschaften Dna, ... Dnx eines ersetzenden Bauteils beispielsweise auf der Baustelle gescannt, und diese Bauteil-Daten gegebenenfalls durch weitere Bauteil-Daten wie beispielsweise Materialdaten ergänzt werden. Nach der Übermittlung dieses Bauteil-Datensatz-Moduls 22, 23, 24 an den Computer 20 und dessen ersetzende Einfügung im Digitaler-Doppelgänger-Datensatz 21, kann dann eine neue Version erzeugt werden und abschließend eine Freigabe durch den Monteur erfolgen.

Eine Demontage eines existierenden Bauteils 2 bis 8 und eine anschließende Montage eines ersetzenden Bauteils kann begleitet durch einen Computer beispielsweise in Form eines Laptops, eines Tablets, eines Mobiltelefons, einer VR-Brille o.ä. durchgeführt werden, welche auf Bauteil-Daten 31 des Digitaler-Doppelgänger-Datensatzes 21 zurückgreifen können. Hierbei kann ein Montageprogramm vorhanden sein, welches Montageschritte vorgibt und dabei auf involvierte Bauteil-Datensatz-Module 22, 23, 24 des Digitaler-Doppelgänger-Datensatzes 21 zurückgreift.

Ergänzend können verschiedene Verifizierungsroutinen durchgeführt werden. Beispielsweise kann ein Vergleich von Identifizierungsnummern, eine Bestätigung durch einen Monteur oder Ähnliches gefordert bzw. überprüft werden. Gegebenenfalls können Fehlermeldungen generiert werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Austauschen eines Bauteils (2 - 8) in einer Personentransportanlage (1), wobei zu der Personentransportanlage (1) ein in einem Computer (20) oder auf einem computerlesbaren Medium digital gespeichert und in einem Computer (20) verarbeitbarer Digitaler-Doppelgänger-Datensatz (21) existiert, welcher Daten betreffend physikalische Eigenschaften (Dna, ... Dnx) der Personentransportanlage (1) umfasst,
wobei das Verfahren umfasst:
physisches Austauschen des Bauteils (2 - 8) durch Entfernen eines existierenden Bauteils (2 - 8) aus der Personentransportanlage (1) und Ersetzen des existierenden Bauteils (2 - 8) durch ein ersetzendes Bauteil (2 - 8);
wobei ein zumindest teilautomatisiertes Austauschen von Bauteil-Daten (31) betreffend physikalische Eigenschaften (Dna, ... Dnx) des Bauteils (2 - 8) durch Ersetzen von Bauteil-Daten (31) betreffend physikalische Eigenschaften (Dna, ... Dnx) des existierenden Bauteils (2 - 8) durch Bauteil-Daten (31) betreffend physikalische Eigenschaften (Dna, ... Dnx) des ersetzenden Bauteils (2 - 8) in dem Digitaler-Doppelgänger-Datensatz (21) erfolgt, **dadurch gekennzeichnet,**
**dass** der Digitaler-Doppelgänger-Datensatz (21) aus einer Vielzahl von Bauteil-Datensatz-Modulen (22, 23, 24) zusammengesetzt ist, wobei jedes dieser Bauteil-Datensatz-Module (22, 23, 24) Bauteil-Daten (31) betreffend physikalische Eigenschaften (Dna, ... Dnx) jeweils eines der Bauteile (2 - 8) in der Personentransportanlage (1) angeben, wobei die in den Bauteil-Daten (31) angegebenen physikalischen Eigenschaften den jeweiligen Verschleißgrad des existierenden Bauteils (2 - 8) berücksichtigen, welcher Verschleißgrad mittels in der Personentransportanlage (1) integrierten Sensoren ermittelt werden kann, wobei beim Austauschen von Bauteil-Daten (31) jeweils ein gesamtes Bauteil-Datensatz-Modul (22, 23, 24) in dem Digitaler-Doppelgänger-Datensatz (1) ersetzt wird, und wobei durch eine aktuelle Analyse des Digitaler-Doppelgänger-Datensatzes (1) sowie aufgrund der vorgenannten Strukturierung des Digitaler-Doppelgänger-Datensatzes (1) mittels Bauteil-Datensatz-Modulen (22, 23, 24) die Simulationen auf das einzelne Bauteil beziehungsweise dessen Bauteil-Datensatz-Modul (22, 23, 24) heruntergebrochen werden können und dadurch das versagende physische Bauteil (2 - 8) direkt identifiziert werden kann.

2. Verfahren nach Anspruch 1, wobei jedes Bauteil-Datensatz-Modul (22, 23, 24) Bauteileinheit-Daten (31) betreffend physikalische Eigenschaften (Dna, ... Dnx) des Bauteils (2 - 8) selbst sowie Schnittstellen-Daten betreffend physikalische Eigenschaften (Dna, ... Dnx), welche eine Kooperation des Bauteils (2 - 8) mit anderen Bauteilen (2 - 8) beschreiben, umfasst.

3. Verfahren nach einem der vorangehenden Ansprüche, wobei die Bauteil-Daten (31) betreffend physikalische Eigenschaften (Dna, ... Dnx) des ersetzenden Bauteils (2 - 8) auch Montage-Daten (32) umfassen, welche durch eine Art eines Einbaus des ersetzenden Bauteils (2 - 8) in die Personentransportanlage (1) beeinflusst sind.

4. Verfahren nach Anspruch 3, wobei die Montage-Daten (32) Kräfte und/oder Momente umfassen, welche angewendet wurden, um beim Ersetzen des Bauteils (2 - 8) das ersetzende Bauteil (2 - 8) in der Personentransportanlage (1) zu fixieren.

5. Verfahren nach Anspruch 3 oder 4, wobei die Montage-Daten (32) von einem zur Montage eingesetzten Werkzeug (10) automatisch erfasst und automatisiert an den, den Digitalcr-Doppclgängcr-Datcnsatz (21) speichernden Computer (20) übermittelt werden.

6. Verfahren nach einem der vorangehenden Ansprüche, wobei die ein ersetzendes Bauteil (2 - 8) betreffenden Bauteil-Daten (31) in einem an dem ersetzenden Bauteil (2 - 8) vorgesehenen Datenspeicher gespeichert sind und automatisiert an den den Digitaler-Doppelgänger-Datensatz (21) speichernden Computer (20) übermittelt werden.

7. Verfahren nach einem der Ansprüche 1 bis 5, wobei an dem Bauteil (2 - 8) eine eindeutige Identifikation (15) vorgesehen ist und die ein ersetzendes Bauteil (2 - 8) betreffenden Bauteil-Daten (31) in einem von dem Bauteil (2 - 8) entfernt vorgesehenen Datenspeicher (16) gespeichert sind, und
wobei die das ersetzende Bauteil (2 - 8) betreffenden Bauteil-Daten (31) durch Übermitteln der Identifikation (15) automatisiert von dem Datenspeicher (16) an den, den Digitaler-Doppelgänger-Datensatz (21) speichernden Computer (20) übermittelt werden.

8. Verfahren nach einem der vorangehenden Ansprüche, wobei zum physischen Austauschen des Bauteils (2 - 8) durchzuführende Arbeitsschritte von einem Computerprogramm unter Berücksichtigung der das Bauteil (2 - 8) betreffenden Bauteil-Daten (31) vorgegeben werden.

9. Verfahren nach einem der vorangehenden Ansprüche, wobei während des Verfahrens Ist-Daten betreffend aktuell vorherrschende physikalische Eigenschaften (Dna, ... Dnx) der Personentransportanlage (1) ermittelt werden und zugehörige Daten in dem Digitaler-Doppelgänger-Datensatz (21) durch die Ist-Daten ersetzt werden.

10. Verfahren zum Überwachen von aktuellen physikalischen Eigenschaften (Dna, ... Dnx) einer Personentransportanlage (1), wobei anfängliche physikalische Eigenschaften (Dna, ... Dnx) der Personentransportanlage (1) in einem Computer (20) in einem digital gespeicherten und verarbeitbaren Digitaler-Doppelgänger-Datensatz (21) angegeben sind, wobei die aktuellen physikalischen Eigenschaften (Dna, ... Dnx) der Personentransportanlage (1) durch Berechnungen, Simulationen und/oder Modellierungen basierend auf den im Digitaler-Doppelgänger-Datensatz (21) angegebenen anfänglichen physikalischen Eigenschaften (Dna, ... Dnx) ermittelt werden, und
wobei einzelne Bauteile (2 - 8) der Personentransportanlage (1) mittels eines Verfahrens gemäß einem der vorangehenden Ansprüche ausgetauscht werden.

11. Computerprogrammprodukt mit computerlesbaren Anweisungen, bei deren Ausführung ein Computer dazu instruiert wird, das Austauschen der Bauteil-Daten (31) in dem Digitaler-Doppelgänger-Datensatz (21) bewirkende Verfahrensschritte bei einem Verfahren gemäß einem der Ansprüche 1 bis 10 durchzuführen oder zu kontrollieren.

12. Computerlesbares Medium mit einem darauf gespeicherten Computerprogrammprodukt gemäß Anspruch 11.

## Claims

1. A method for exchanging a component (2-8) in a passenger transport system (1), wherein a digital replica dataset (21), which is digitally stored in a computer (20) or on a machine-readable medium and can be processed in a computer (20), exists parallel to the passenger transport system (1), wherein said digital replica dataset comprises data concerning physical properties (Dna, ..., Dnx) of the passenger transport system (1), wherein said method comprises the step of
physically exchanging the component (2-8) by removing an existing component (2-8) from the passenger transport system (1) and replacing the existing component (2-8) with a replacement component (2-8);
wherein component data (31) concerning physical properties (Dna, ..., Dnx) of the component (2-8) is exchanged in an at least partially automated manner by replacing component data (31) concerning physical properties (Dna, ..., Dnx) of the existing component (2-8) with component data (31) concerning physical properties (Dna, ..., Dnx) of the replacement component (2-8) in the digital replica dataset (21), **characterized in that** the digital replica dataset (21) is composed of a plurality of component dataset modules (22, 23, 24), wherein each of these component dataset modules (22, 23, 24) respectively describes component data (31) concerning physical properties (Dna, ..., Dnx) of one of the components (2-8) in the passenger transport system (1), wherein the physical properties described in the component data (31) take into account the respective degree of wear of the existing component (2-8), which can be determined by means of sensors integrated into the passenger transport system (1), wherein an entire component dataset module (22, 23, 24) is respectively replaced in the digital replica dataset (1) during an exchange of component data (31), and wherein a current analysis of the digital replica dataset (1), as well as the aforementioned structuring of the digital replica dataset (1) by means of component dataset modules (22, 23, 24), makes it possible to reduce the simulations to the individual component or its component dataset module (22, 23, 24) and to thereby directly identify the failing physical component (2-8).

2. The method according to claim 1, wherein each component dataset module (22, 23, 24) comprises component unit data (31) concerning physical properties (Dna, ..., Dnx) of the component (2-8) itself, as well as interface data concerning physical properties (Dna, ..., Dnx) that describe a cooperation of the component (2-8) with other components (2-8).

3. The method according to one of the preceding claims, wherein the component data (31) concerning physical properties (Dna, ..., Dnx) of the replacement component (2-8) also comprises installation data (32) that is affected by the type of installation of the replacement component (2-8) in the passenger transport system (1).

4. The method according to claim 3, wherein the installation data (32) comprises forces and/or torques that were applied for fixing the replacement component (2-8) in the passenger transport system (1) during the replacement of the component (2-8).

5. The method according to claim 3 or 4, wherein the installation data (32) is automatically acquired by a tool (10) used for the installation and transmitted to the computer (20) storing the digital replica dataset (21) in an automated manner.

6. The method according to one of the preceding claims, wherein the component data (31) concerning a replacement component (2-8) is stored in a data storage unit provided on the replacement component (2-8) and transmitted to the computer (20) storing the digital replica dataset (21) in an automated manner.

7. The method according to one of claims 1 to 5, wherein a unique identification (15) is provided on the component (2-8) and the component data (31) concerning the replacement component (2-8) is stored in a data storage unit (16) that is arranged remotely from the component (2-8), and wherein the component data (31) concerning the replacement component (2-8) is transmitted from the data storage unit (16) to the computer (20) storing the digital replica dataset (21) in an automated manner by transmitting the identification (15).

8. The method according to one of the preceding claims, wherein work steps to be carried out for the physical exchange of the component (2-8) are specified by a computer program with consideration of the component data (31) concerning the component (2-8).

9. The method according to one of the preceding claims, wherein actual data concerning currently prevailing physical properties (Dna, ..., Dnx) of the passenger transport system (1) is acquired during the method and associated data in the digital replica dataset (21) is replaced with the actual data.

10. A method for monitoring current physical properties (Dna, ..., Dnx) of a passenger transport system (1), wherein initial physical properties (Dna, ..., Dnx) of the passenger transport system (1) are specified in a computer (20) in a digitally stored digital replica dataset (21) that can also be processed, wherein the current physical properties (Dna, ..., Dnx) of the passenger transport system (1) are determined by means of calculations, simulations and/or models based on the initial physical properties (Dna, ..., Dnx) specified in the digital replica dataset (21), and wherein individual components (2-8) of the passenger transport system (1) are exchanged by means of a method according to one of the preceding claims.

11. A computer program product with machine-readable instructions, upon the execution of which a computer is instructed to carry out or control process steps of a method according to one of claims 1 to 10, which effect the exchange of the component data (31) in the digital replica dataset (21).

12. A machine-readable medium with a computer program product according to claim 11 stored thereon.

## Revendications

1. Procédé, destiné à changer un élément constitutif (2 à 8) dans une installation de transport de personnes (1), un ensemble de données numériques jumelles (21) numériquement mémorisé dans un ordinateur (20) ou sur un support lisible par ordinateur et susceptible d'être traité par ordinateur (20), lequel comprend des données concernant des caractéristiques (Dna, ... Dnx) de l'installation de transport de personnes (1) existant pour l'installation de transport de personnes (1),
le procédé comprenant les étapes consistant à :
changer physiquement l'élément constitutif (2 à 8) en retirant un élément constitutif (2 à 8) existant de l'installation de transport de personnes (1) et en remplaçant l'élément constitutif (2 à 8) existant par un élément constitutif (2 à 8) de remplacement ;
un échange au moins semi-automatisé de données d'élément constitutif (31) concernant des caractéristiques physiques (Dna, ... Dnx) de l'élément constitutif (2 à 8) par remplacement de données d'élément constitutif (31) concernant des caractéristiques physiques (Dna, ... Dnx) de l'élément constitutif (2 à 8) existant par des données d'élément constitutif (31) concernant des caractéristiques physiques (Dna, ... Dnx) de l'élément constitutif (2 à 8) de remplacement dans l'ensemble de données numériques jumelles (21) ayant lieu, **caractérisé en ce que**
l'ensemble de données numériques jumelles (21) se compose d'une pluralité de modules d'ensembles de données d'élément constitutif (22, 23, 24), chacun desdits modules d'ensembles de données d'élément constitutif (22, 23, 24) mentionnant des données d'élément constitutif (31) concernant des caractéristiques physiques (Dna, ... Dnx) de respectivement l'un des éléments constitutifs (2 à 8) dans l'installation de transport de personnes (1), les caractéristiques physiques mentionnées dans les données d'élément constitutif (31) prenant en considération le niveau d'usure respectif de l'élément constitutif (2 à 8) existant, lequel niveau d'usure pouvant être déterminé à l'aide de capteurs intégrés dans l'installation de transport de personnes (1), lors du changement de données d'élément constitutif (31), chaque fois un module complet d'ensembles de données d'élément constitutif (22, 23, 24) étant remplacé dans l'ensemble de données numériques jumelles (1), et par une analyse actuelle de l'ensemble de données numériques jumelles (1) et également du fait de la structuration précédemment citée de l'ensemble de données numériques jumelles (1) au moyen de modules d'ensembles de données d'élément constitutif (22, 23, 24), les simulations pouvant être appliquées à l'élément constitutif individuel, respectivement à son module d'ensemble de données d'élément constitutif (22, 23, 24) et ainsi, l'élément constitutif (2 à 8) défaillant pouvant être directement identifié.

2. Procédé selon la revendication 1, chaque module de données d'élément constitutif (22, 23, 24) comprenant des données d'unité d'élément constitutif (31) concernant des caractéristiques physiques (Dna, ... Dnx) de l'élément constitutif (2 - 8) proprement dit, ainsi que des données d'interface concernant des caractéristiques physiques (Dna, ... Dnx), lesquelles décrivent une coopération de l'élément constitutif (2 à 8) avec d'autres éléments constitutifs (2 à 8).

3. Procédé selon l'une quelconque des revendications précédentes, les données d'élément constitutif (31) concernant des caractéristiques physiques (Dna, ... Dnx) de l'élément constitutif (2 à 8) de remplacement comprenant également des données de montage (32), lesquelles sont influencées par une manière d'intégrer l'élément constitutif (2 à 8) de remplacement dans l'installation de transport de personnes (1)

4. Procédé selon la revendication 3, les données de montage (32) comprenant des efforts et / ou des couples qui ont été appliqués pour fixer l'élément constitutif (2 à 8) de remplacement dans l'installation de transport de personnes (1), lors du remplacement de l'élément constitutif (2 à 8).

5. Procédé selon la revendication 3 ou 4, les données de montage (32) étant automatiquement capturées par un outil (10) utilisé pour le montage et transférées de manière automatisée à l'ordinateur (20) sur lequel est mémorisé l'ensemble de données numériques jumelles (21).

6. Procédé selon l'une quelconque des revendications précédentes, les données d'élément constitutif (31) concernant un élément constitutif (2 à 8) de remplacement étant mémorisées dans une mémoire de données prévue sur l'élément constitutif (2 à 8) de remplacement et transférées de manière automatisée à l'ordinateur (20) sur lequel est mémorisé l'ensemble de données numériques jumelles (21).

7. Procédé selon l'une quelconque des revendications 1 à 5, sur l'élément constitutif (2 à 8) étant prévue une identification (15) univoque et les données d'élément constitutif (31) concernant un élément constitutif (2 à 8) de remplacement étant mémorisées dans une mémoire de données (16) prévue à distance de l'élément constitutif (2 à 8), et
par transfert de l'identification (15), les données d'élément constitutif (31) concernant l'élément constitutif (2 à 8) de remplacement étant transférées de manière automatisée de la mémoire de données (16) vers l'ordinateur (20) sur lequel est mémorisé l'ensemble de données numériques jumelles (21).

8. Procédé selon l'une quelconque des revendications précédentes, des étapes de travail devant être réalisées pour l'échange physique de l'élément constitutif (2 à 8) étant prédéfinies par un programme informatique, sous considération des données d'élément constitutif (31) concernant l'élément constitutif (2 à 8).

9. Procédé selon l'une quelconque des revendications précédentes, pendant le procédé, des données réelles concernant des caractéristiques physiques (Dna, ... Dnx) actuellement prédominantes de l'installation de transport de personnes (1) étant déterminées et des données associées dans l'ensemble de données numériques jumelles (21) étant remplacées par les données réelles.

10. Procédé, destiné à superviser des caractéristiques physiques (Dna, ... Dnx) actuelles d'une installation de transport de personnes (1), des caractéristiques physiques (Dna, ... Dnx) initiales de l'installation de transport de personnes (1) étant mentionnées dans un ordinateur (20) dans un ensemble de données numériques jumelles (21) mémorisé numériquement et susceptible d'être traité, les caractéristiques physiques (Dna, ... Dnx) actuelles de l'installation de transport de personnes (1) étant déterminées par des calculs, des simulations et / ou des modélisations, sur la base des caractéristiques physiques (Dna, ... Dnx) initiales mentionnées dans l'ensemble de données numériques jumelles (21), et
des éléments constitutifs (2 à 8) individuels de l'installation de transport de personnes (1) étant échangés au moyen d'un procédé selon l'une quelconque des revendications précédentes.

11. Produit de programme informatique, contenant des consignes lisibles par ordinateur, lors de l'exécution duquel un ordinateur est instruit pour réaliser ou contrôler le remplacement d'étapes de procédé donnant lieu à des données d'élément constitutif (31) dans l'ensemble de données numériques jumelles (21), lors d'un procédé selon l'une quelconque des revendications 1 à 10.

12. Support lisible par ordinateur, doté d'un produit de programme informatique selon la revendication 11, mémorisé sur celui-ci.
